# EUROPÄISCHE PATENTSCHRIFT

(11) **EP 0 501 979 B1**
(45) Veröffentlichungstag und Bekanntmachung des Hinweises auf die Patenterteilung: **14.09.1994**
(21) Anmeldenummer: 90916231.5
(22) Anmeldetag: 13.11.1990
(51) Int. Cl.: G01P 15/12, G01C 9/06

(54) **SENSOR ZUR ERFASSUNG DER BESCHLEUNIGUNG UND DER NEIGUNG EINES BEWEGLICHEN GEGENSTANDES, INSBESONDERE EINES KRAFTFAHRZEUGES**
SENSOR FOR THE DETERMINATION OF THE ACCELERATION AND ANGLE OF TILT OF A MOBILE OBJECT, IN PARTICULAR A MOTOR VEHICLE
CAPTEUR POUR LA SAISIE DE L'ACCELERATION ET DE L'INCLINAISON D'UN OBJET MOBILE, EN PARTICULIER D'UN VEHICULE AUTOMOBILE

(30) Priorität: 29.11.1989 DE 3939410
(43) Veröffentlichungstag der Anmeldung: 09.09.1992
(73) Patentinhaber: ROBERT BOSCH GMBH, 70442 Stuttgart (DE)
(72) Erfinder: ZIEGENBEIN, Botho, D-7410 Reutlingen (DE); KIPPELT, Ulrich, D-7412 Eningen (DE); FOELL, Uwe, D-7413 Gomaringen (DE)
(86) Internationale Anmeldenummer: DE9000862
(87) Internationale Veröffentlichungsnummer: WO9108492

(56) Entgegenhaltungen:
- EP-A- 0 011 087
- WO-A-87/05569
- US-A- 3 114 209

## Beschreibung

### Stand der Technik

Die Erfindung betrifft einen Sensor nach der Gattung des Anspruchs 1.

Aus der WO-A-87/05569 ist bereits ein Sensor bekannt, bei dem zur Erfassung der Beschleunigung und der Neigung eines Kraftfahrzeuges ein auf der Brechung oder Reflexion beruhendes optisches Verfahren verwendet wird. Bei diesem Verfahren wird ein von einem Sender ausgehender Lichtstrahl an der Trennfläche Flüssigkeit/Gasblase gebrochen oder reflektiert und trifft auf einen Empfänger, wenn die in dem Gehäuse enthaltene Gasblase sich in ihrer Ausgangslage befindet. Wird die Gasblase dagegen infolge einer Beschleunigung oder einer Neigung des Kraftfahrzeuges von ihrer Ausgangslage ausgelenkt, so wird der Lichtstrahl an der Trennfläche Flüssigkeit/Gasblase in eine andere Richtung gebrochen oder reflektiert und trifft nicht mehr auf den Empfänger, so daß von der optischen Einrichtung ein Signal ausgelöst wird.

Dieser Sensor hat den Nachteil, daß die zur Realisierung des optischen Verfahrens bereitzustellenden Mittel (Sender, Empfänger usw.) einen relativ hohen Aufwand an mechanischen, optischen und elektrischen Teilen erfordern.

In US-A- 3 114 209 wird ein Neigungssensor mit einem Gehäuse, das eine Flüssigkeit und eine Luftblase umschließt, beschrieben. Dieser Sensor weist einen Widerstandsdraht auf, der teilweise in der Gasblase und teilweise in der Flüssigkeit gelegen ist. Durch Neigung des Sensorelementes wird die Luftblase derart verschoben, daß der Anteil des Widerstandsdrahtes, der in die Flüssigkeit eintaucht, verändert wird. Die damit verbundene Änderung der Wärmeabführung des Widerstandsdrahtes bewirkt eine Widerstandsänderung, deren Messung eine Aussage über die Neigung des Sensors erlaubt.

### Vorteile der Erfindung

Der erfindungsgemäße Sensor mit den Merkmalen des Anspruchs 1 hat demgegenüber den Vorteil, daß er sehr kostengünstig herzustellen und über einen sehr weiten Temperaturbereich einsetzbar ist. Weitere Vorteile ergeben sich aus den abhängigen Ansprüchen 2 bis 10.

### Zeichnung

Anhand der Zeichnung wird die Erfindung näher erläutert.

Es zeigen:
Figur 1 einen Querschnitt durch ein Ausführungsbeispiel eines erfindungsgemäßen Sensors mit einer Libelle, schematisch,
Figur 2 das elektrische Schaltbild einer möglichen Auswerteschaltung des Sensors nach Figur 1,
Figur 3 die als Hybridplatte ausgebildete Deckelplatte des Gehäuses der Libelle nach Figur 1 mit den darauf befindlichen Schaltungselementen der Auswerteschaltung in der Draufsicht,
Figur 4 ein in Blasentechnik ausgebildetes elektrisch aufheizbares, temperaturempfindliches elektrisches Schaltungselement im Schnitt senkrecht zu der Oberfläche der als Hybridplatte ausgebildeten Deckelplatte.

### Beschreibung des Ausführungsbeispiels

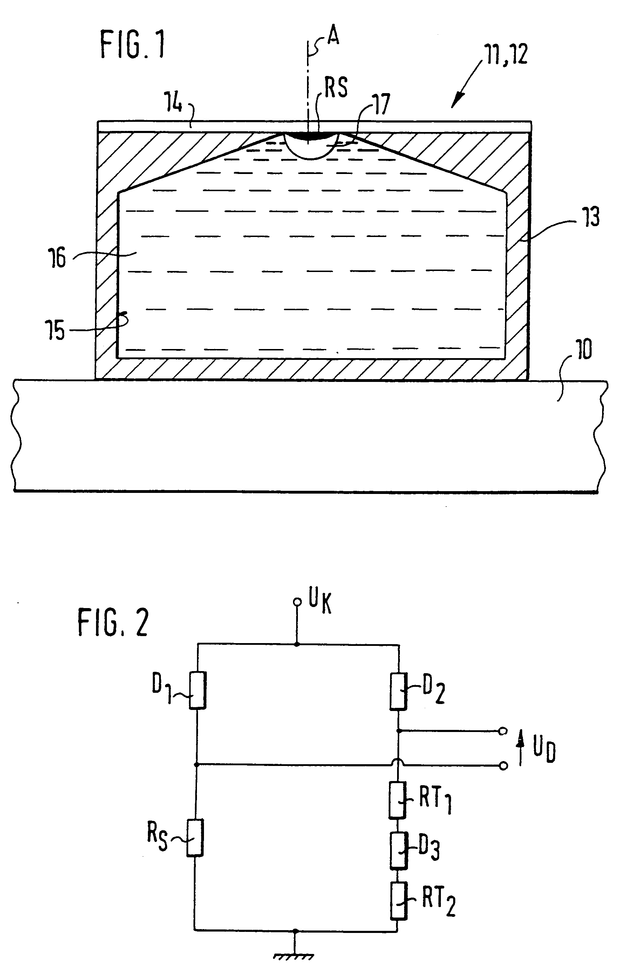

In Figur 1 ist schematisch der Aufbau eines Ausführungsbeispiels eines erfindungsgemäßen thermischen Beschleunigungs- und Neigungssensors dargestellt. An einem beweglichen Gegenstand 10, beispielsweise einem Kraftfahrzeug, dessen Beschleunigung und Neigung erfaßt werden soll, ist eine Libelle 11 befestigt. Sie umfaßt ein Gehäuse 12, das aus einem Gehäuseunterteil 13 und einer Deckelplatte 14 besteht. Die Deckelplatte 14 ist an dem Gehäuseunterteil 13 so befestigt, daß das Gehäuse 12 vollständig dicht ist. Das Gehäuse 12 umschließt einen rotationssymmetrisch ausgebildeten Hohlraum 15, der sich gegen die Deckelplatte 14 hin konisch verjüngt. Der obere Teil des Hohlraums 15 hat dabei die Form eines Kegelstumpfs, wobei der Böschungswinkel des Kegelstumpfs vorzugsweise 21° beträgt. In dem von dem Gehäuse 12 umschlossenen Hohlraum 15 ist eine Flüssigkeit 16 und eine Luftblase 17 enthalten, wobei die Flüssigkeit 16 und die Luftblase 17 den Hohlraum 15 gemeinsam vollständig ausfüllen. In ihrer in Figur 1 dargestellten Ausgangslage liegt die Luftblase 17 an der Deckelplatte 14 an und erstreckt sich konzentrisch um die Achse A des rotationssymmetrisch ausgebildeten Hohlraums 15.

Die Deckelplatte 14 ist als Hybridplatte ausgebildet und einseitig mit elektronischen Bauelementen bestückt.

Wie aus der Schnittdarstellung der Figur 1 ersichtlich, ist auf die dem Gehäuseunterteil 13 zugekehrte Oberflächenseite der Deckelplatte 14 ein als ohmsches Widerstandselement ausgebildetes elektrisches Schaltungselement RS aufgebracht.

Wie aus Figur 2 erkennbar, ist das als ohmsches Widerstandselement ausgebildete elektrische Schaltungselement RS Bestandteil einer Wheatstoneschen Brückenschaltung mit den Widerständen RS, RT₁, RT₂, D₁, D₂ und D₃, die die Auswerteschaltung des Sensors nach Figur 1 bildet. An einer ersten Brückendiagonalen der Wheatstoneschen Brückenschaltung liegt eine konstante Referenzgleichspannung U_{K} an. An der anderen, zweiten Brückendiagonalen wird das Ausgangssignal U_{D} des Sensors abgenommen.

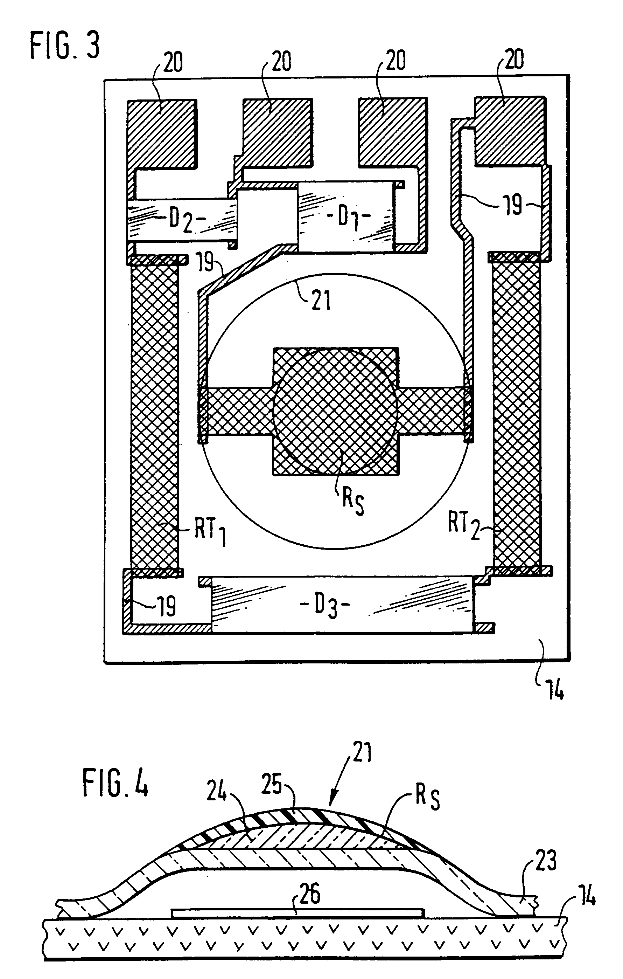

Figur 3 zeigt die als Hybridplatte ausgebildete Deckelplatte 14 in der Draufsicht auf diejenige Oberflächenseite, auf die das elektrische Schaltungselement RS aufgebracht ist. Das Schaltungselement RS und die Widerstände RT₁, RT₂, D₁, D₂ und D₃ der Auswerteschaltung sind in Dickschichttechnik hergestellt. Die Widerstände RT₁, RT₂, D₃ können als Fühlwiderstände für die Umgebungstemperatur verwendet werden. Der Widerstand D₃ wird dabei dazu benutzt, den Temperaturkoeffizienten der Reihenschaltung der Widerstände RT₁, D₃, RT₂ einzustellen. Die Leiterbahnen sind mit 19, die Anschlußflecken für den äußeren Anschluß der Wheatstoneschen Brückenschaltung mit 20 bezeichnet.

In Figur 4 ist dargestellt, wie das elektrisch aufheizbare temperaturempfindliche elektrische Schaltungselement RS in vorteilhafter Weise auf der Hybridplatte 14 in Blasentechnik aufgebaut werden kann. Auf der Hybridplatte 14 ist eine Blase 21 aufgewölbt, die aus keramischem Werkstoff, vorzugsweise aus Glaskeramik besteht. In der Blase 21 ist das als Schichtwiderstand ausgebildete Widerstandselement RS untergebracht. Die Blase 21 enthält eine in Dickschichttechnik hergestellte Membran 23, auf der das Widerstandselement RS angeordnet ist, wobei zwischen der Membran 23 und dem Widerstandselement RS sich eine aus Glas bestehende Zwischenschicht 24 befindet. Das Widerstandselement RS ist mit einer gut wärmeleitenden, aus Glas bestehenden Schutzschicht 25 abgedeckt.

Bei der Herstellung des in Blasentechnik ausgebildeten Widerstandselements RS wird wie folgt verfahren:

Der Prozeß beginnt damit, daß auf die Hybridplatte 14 an der Stelle, an der die Blase 21 angebracht werden soll, ein aus Dickschichtpaste bestehendes Podest 26 aufgedruckt und anschließend getrocknet und in Luft gebrannt wird. Hierauf wird auf das Podest 26 eine in der Zeichnung nicht dargestellte Schicht aus Kohlepaste gedruckt, die anschließend getrocknet und in Stickstoff gebrannt wird. Beim Brennen der Kohlepaste in Stickstoff entweichen im wesentlichen nur die flüchtigen Bestandteile, die Kohle bleibt jedoch als fester Bestandteil erhalten. Dann wird auf die Kohleschicht und auf einen sie umgebenden Randbereich eine aus einer keramischen Dickschichtpaste bestehende Schicht aufgedruckt und das System anschließend in Stickstoff und hierauf in Luft gebrannt. Beim Brennen des Systems in Luft brennt die Kohleschicht vollständig aus und die auf die Kohleschicht aufgebrachte Schicht wird zu einer Memban aufgewölbt. Da in diesem Verfahrensstand die Membran noch zu porös und zu dünn ist, wird sie anschließend durch Einlagerung von Glas verstärkt und verdichtet. Auf diese Weise entsteht die in Figur 4 dargestellte Membran 23.

Auf die Membran 23 wird nun eine Glasschicht 24 aufgedruckt. die als Unterlage für das darauf aufzubringende, als Schichtwiderstand ausgebildete Widerstandselement RS dient und die Haftung und die Homogenität dieses Widerstandselements verbessern soll. Bei geeigneter Wahl des Materials für die Membran 23 kann jedoch die Glasschicht 24 auch entfallen.

Zur Herstellung des Widerstandselements RS wird eine platinhaltige Paste verwendet. Anschließend wird die Schutzschicht 25 aufgetragen. Die Schutzschicht 25 schützt das Widerstandselement RS und die in Figur 4 nicht dargestellten Leiterbahnen vor Verschmutzung und Korrosion. Die Schutzschicht 25 wird so ausgeführt, daß eine gute thermische Ankopplung der Temperatur der beiden Medien 16 und 17 an die Temperatur des Widerstandselements RS gewährleistet ist.

Die Wirkungsweise des Sensors nach den Figuren 1 bis 4 ist folgende:

Das temperaturempfindliche elektrische Schaltungselement RS erwärmt sich infolge der an die erste Brückendiagonale der Wheatstoneschen Brückenschaltung angelegten konstanten Referenzgleichspannung U_{K} auf eine bestimmte Temperatur, bei der das temperaturempfindliche elektrische Schaltungselement RS einen bestimmten Widerstandswert annimmt. Wird der Sensor beschleunigt und/oder geneigt, dann wandert die Luftblase 17 zum Rand des Gehäuses 12 und das temperaturempfindliche elektrische Schaltungselement RS wird von der Flüssigkeit 16 umströmt. Dadurch sinkt die Temperatur des temperaturempfindlichen elektrischen Schaltungselementes RS und damit auch dessen ohmscher Widerstandswert. An der zweiten Brückendiagonalen der Wheatstoneschen Brückenschaltung verändert sich das Ausgangssignal U_{D}, das die Beschleunigung und/oder die Neigung des Sensors bzw. des beweglichen Gegenstandes anzeigt.

Der besondere Vorteil des erfindungsgemäßen Sensors besteht darin, daß kein Abrieb beim Dauerschütteln und nur eine geringe Hysterese auftritt und daß der Sensor kostengünstig in Hybridtechnologie herzustellen ist.

Vorteilhaft ist des weiteren, daß der Sensor infolge des rotationssymmetrischen Aufbaus der Libelle omnidirektional messen kann und daß die Flüssigkeit nicht notwendigerweise transparent sein muß. Der Sensor ist unempfindlich gegen senkrechte Beschleunigung. Seine Empfindlichkeit bzw. Ansprechneigung ist durch die Formgebung der oberen Gehäuseinnenseite in weiten Bereichen veränderbar. Das Dämpfungs- bzw. Zeitverhalten des Sensors ist durch die Art der Flüssigkeit und den Strömungsquerschnitt (Abstand Boden - Deckel) einstellbar.

Die aus Platin bestehenden Widerstände RS, RT₁ und RT₂ haben einen Temperaturkoeffizienten TK von 3400 ppm/K, die Dickschichtwiderstände D₁, D₂ und D₃ einen Temperaturkoeffizienten TK von 50 ppm/K.

## Patentansprüche

1. Sensor zur Erfassung der Beschleunigung und der Neigung eines beweglichen Gegenstandes (10), insbesondere eines Kraftfahrzeuges, mit Hilfe einer an dem Gegenstand (10) befestigten Libelle (11), die ein Gehäuse (12), eine in dem Gehäuse (12) befindliche Flüssigkeit (16) und eine in dem Gehäuse (12) befindliche Gasblase (17) umfaßt, wobei die Flüssigkeit (16) und die Gasblase (17) den von dem Gehäuse (12) umschlossenen Hohlraum (15) gemeinsam derart vollständig ausfüllen, daß die Gasblase (17) von der Flüssigkeit (16) nicht vollständig umschlossen wird, sondern an der Innenseite des Gehäuses (12) anliegt, so daß die Trennfläche Flüssigkeit/Gasblase auf die Innenseite des Gehäuses (12) stößt, und wobei die Gasblase (17) sich in dem Gehäuse (12) in einer Ausgangslage befindet, wenn die Beschleunigung und die Neigung der Libelle (11) gleich Null sind oder sich in ihrer Wirkung gegenseitig aufheben, wobei ferner der Sensor ein elektrisch aufheizbares, temperaturempfindliches elektrisches Schaltungselement (RS) aufweist und das elektrische Schaltungselement (RS) Bestandteil einer Auswerteschaltung ist, die ein von der Beschleunigung und der Neigung der Libelle (11) abhängiges Ausgangssignal (U_{D}) abgibt, dadurch gekennzeichnet, daß an der Innenseite des Gehäuses (12) innerhalb desjenigen Bereichs, über den sich die Gasblase (17) in der genannten Ausgangslage erstreckt, das elektrische Schaltungselement (RS) angebracht ist, daß das Gehäuse (12) aus einem Gehäuseunterteil (13) und einer Deckelplatte (14) besteht, daß das elektrische Schaltungselement (RS) an der dem Gehäuseunterteil (13) zugewandten Oberflächenseite der Deckelplatte (14) angebracht ist, und daß das Schaltungselement (RS) auf der als Hybridplatte ausgebildeten Deckelplatte (14) durch Dickschichttechnik erzeugt wurde.

2. Sensor nach Anspruch 1, dadurch gekennzeichnet, daß das elektrische Schaltungselement (RS) durch einen durch das elektrische Schaltungselement (RS) fließenden elektrischen Strom aufheizbar ist.

3. Sensor nach einem der Ansprüche 1 oder 2, dadurch gekennzeichnet, daß das elektrische Schaltungselement (RS) ein ohmsches Widerstandselement ist.

4. Sensor nach Anspruch 3, dadurch gekennzeichnet, daß das ohmsche Widerstandselement (RS) ein Schichtwiderstandselement ist.

5. Sensor nach Anspruch 4, dadurch gekennzeichnet, daß das Schichtwiderstandselement (RS) in einer aus keramischem Werkstoff, insbesondere aus Glaskeramik bestehenden Blase (21) untergebracht ist, die an der Innenseite des Gehäuses (12), vorzugsweise an der dem Gehäuseunterteil (13) zugewandten Oberflächenseite der Deckelplatte (14) aufgewölbt ist.

6. Sensor nach Anspruch 5, dadurch gekennzeichnet, daß die Blase (21) eine in Dickschichttechnik hergestellte Membran (23) enthält, auf der das Schichtwiderstandselement (RS) angeordnet ist.

7. Sensor nach mindestens einem der Ansprüche 1 bis 6, dadurch gekennzeichnet, daß auf die als Hybridplatte ausgebildete Deckelplatte (14) weitere elektrische Schaltungselemente (RT₁, RT₂, D₁, D₂, D₃) aufgebracht sind, die Bestandteil der Auswerteschaltung sind.

8. Sensor nach Anspruch 7, dadurch gekennzeichnet, daß die weiteren elektrischen Schaltungselemente (RT₁, RT₂, D₁, D₂, D₃) an der dem Gehäuseunterteil (13) zugewandten Oberflächenseite der Deckelplatte (14) angebracht sind.

9. Sensor nach einem der Ansprüche 1 bis 8, dadurch gekennzeichnet, daß der von dem Gehäuse (12) umschlossene Hohlraum (15) mindestens in der Nähe der Ausgangslage der Gasblase (17) die Form eines Kegelstumpfs hat.

10. Sensor nach Anspruch 9, dadurch gekennzeichnet, daß der Böschungswinkel des Kegelstumpfs 21° beträgt.

## Claims

1. Sensor for determining the acceleration and inclination of a mobile object (10), in particular a motor vehicle, with the aid of a spirit level (11), which is fastened on the object (10) and comprises a housing (12), a liquid (16) located inside the housing (12) and a gas bubble (17) located in the housing (12), the liquid (16) and the gas bubble (17) together filling the space (15) enclosed by the housing (12) so completely that the gas bubble (17) is not completely surrounded by the liquid (16) but bears against the inside of the housing (12), so that the liquid/gas bubble interface makes contact with the inside of the housing (12), and the gas bubble (17) being located in the housing (12) in an initial position when the acceleration and the inclination of the spirit level (11) are zero or cancel each other out, the sensor further having an electrically heatable, temperature-sensitive electrical circuit element (RS) and the electrical circuit element (RS) being a component part of an evaluation circuit which emits an output signal (U_{D}) dependent on the acceleration and the inclination of the spirit level (11), characterized in that the electrical circuit element (RS) is fitted on the inside of the housing (12) within that region over which the gas bubble (17) extends in the said initial position, in that the housing (12) comprises a lower housing part (13) and a cover plate (14), in that the electrical circuit element (RS) is fitted on the surface side of the cover plate (14) facing the lower housing part (13), and in that the circuit element (RS) was produced by the thick-film technique on the cover plate (14) formed as a hybrid board.

2. Sensor according to Claim 1, characterized in that the electrical circuit element (RS) can be heated by an electric current flowing through the electrical circuit element (RS).

3. Sensor according to Claim 1 or 2, characterized in that the electrical circuit element (RS) is an ohmic resistance element.

4. Sensor according to Claim 3, characterized in that the ohmic resistance element (RS) is a film resistance element.

5. Sensor according to Claim 4, characterized in that the film resistance element (RS) is accommodated in a pocket (21) consisting of ceramic material, in particular of glass ceramic, which bulges on the inside of the housing (12), preferably on the surface side of the cover plate (14) facing the lower housing part (13).

6. Sensor according to Claim 5, -characterized in that the pocket (21) includes a membrane (23), produced by the thick-film technique, on which the film resistance element (RS) is arranged.

7. Sensor according to at least one of Claims 1 to 6, characterized in that on the cover plate (14) designed as a hybrid board there are fitted further electrical circuit elements (RT₁, RT₂, D₁, D₂, D₃) which are component parts of the evaluation circuit.

8. Sensor according to Claim 7, characterized in that the further electrical circuit elements (RT₁, RT₂, D₁, D₂, D₃) are fitted on the surface side of the cover plate (14) facing the lower housing part (13).

9. Sensor according to one of Claims 1 to 8, characterized in that the space (15) enclosed by the housing (12) has, at least in the vicinity of the initial position of the gas bubble (17), the form of a truncated cone.

10. Sensor according to Claim 9, characterized in that the angle of slope of the truncated cone is 21°.

## Revendications

1. Capteur pour la saisie de l'accélération et de l'inclinaison d'un objet mobile (10) notamment d'un véhicule automobile à l'aide d'un niveau à eau (11) fixé à l'objet (10) qui est logé dans un boîtier (12) et comprenant un liquide (16) dans le boîtier et une bulle de gaz (17) également dans le boîtier (12), le liquide (16) et la bulle de gaz (17) remplissant complètement en commun le volume (15) enfermé par le boîtier (12), la bulle de gaz (17) n'étant pas entourée complètement par le liquide (16), mais s'appliquant contre la face inférieure du boîtier (12) pour que le dioptre liquide/bulle de gaz vienne contre la face intérieure du boîtier (12), la bulle de gaz (17) se trouve en position de repos dans le boîtier (12) lorsque l'accélération et l'inclinaison du niveau à eau (11) sont nulles ou se compensent réciproquement, et en outre le capteur comporte un élément de circuit électrique RS sensible à la température, susceptible d'être chauffé électriquement et cet élément de circuit électrique RS fait partie d'un circuit d'exploitation qui donne un signal de sortie (U_{D}) dépendant de l'accélération et de l'inclinaison du niveau à eau (11), capteur caractérisé en ce que sur la face intérieure du boîtier (12) à l'intérieur de la zone dans laquelle se développe la bulle de gaz (17) en position de repos, se trouve l'élément de circuit électrique RS, le boîtier (12) se composant d'une partie inférieure (13) et d'une plaque de couvercle (14), l'élément de circuit électrique RS étant prévu sur la grande face de la plaque de couvercle (14) tournée vers la partie inférieure de boîtier (13) et en ce que l'élément de circuit RS est réalisé sur la plaque de couvercle (14) en forme de plaque hybride selon la technique des couches épaisses.

2. Capteur selon la revendication 1, caractérisé en ce que l'élément de circuit électrique RS peut être chauffé par un courant électrique traversant l'élément de circuit électrique RS.

3. Capteur selon l'une des revendications 1 ou 2, caractérisé en ce que l'élément de circuit électrique RS est un élément à résistance ohmique.

4. Capteur selon la revendication 3, caractérisé en ce que l'élément à résistance ohmique RS est un élément formé par une résistance en couche.

5. Capteur selon la revendication 4, caractérisé en ce que l'élément résistant en couche RS est logé dans une bulle (21) en matière céramique notamment en céramique de verre prévue sur la face intérieure du boîtier (12) de préférence sur la grande face de la plaque de couvercle (14), tournée vers la partie inférieure (13) du boîtier, cette bulle étant bombée.

6. Capteur selon la revendication 5, caractérisé en ce que la bulle (21) contient une membrane (23) réalisée en technique des couches épaisses portant l'élément résistant en couche RS.

7. Capteur selon au moins l'une des revendications 1 à 6, caractérisé en ce que la plaque de couvercle (14) en forme de plaque hybride comporte d'autres éléments de circuit électriques (RT₁, RT₂, D₁, D₂, D₃) faisant partie du circuit d'exploitation.

8. Capteur selon la revendication 7, caractérisé en ce que les autres éléments de circuit électriques (RT₁, RT₂, D₁, D ₂, D₃) sont montés sur la grande face de la plaque de couvercle (14) tournée vers la partie inférieure du boîtier (13).

9. Capteur selon l'une des revendications 1 à 8, caractérisé en ce que la cavité (15) délimitée par le boîtier (12) présente au moins à proximité de la position de repos de la bulle (17), la forme d'un tronc de cône.

10. Capteur selon la revendication 9, caractérisé en ce que l'angle de talus du tronc de cône est égal à 21°.
